# EUROPÄISCHE PATENTSCHRIFT

(11) **EP 1 379 416 B1**
(45) Veröffentlichungstag und Bekanntmachung des Hinweises auf die Patenterteilung: **24.02.2010**
(21) Anmeldenummer: 02732366.6
(22) Anmeldetag: 30.03.2002
(51) Int. Cl.: B60T 7/06, G05G 1/32, B60R 21/09

(54) **PEDALBOCK**
PEDAL BEARER
SUPPORT DE PEDALE

(30) Priorität: 06.04.2001 DE 10117407
(43) Veröffentlichungstag der Anmeldung: 14.01.2004
(73) Patentinhaber: GM Global Technology Operations, Inc., Detroit, MI 48265-3000 (US)
(72) Erfinder: HUBBERT, Heinz-Jürgen, 65428 Rüsselsheim (DE); WROBEL, Bert, 55278 Undenheim (DE)
(74) Vertreter: Strauss, Peter
(86) Internationale Anmeldenummer: PCT/DE2002/001177
(87) Internationale Veröffentlichungsnummer: WO 2002/081277

(56) Entgegenhaltungen:
- EP-A- 0 659 615
- EP-A- 0 847 900
- DE-A- 19 501 680
- US-A- 5 996 440

## Beschreibung

Die Erfindung bezieht sich auf einen Pedalbock gemäß dem Oberbegriff von Patentanspruch 1.

Die EP 0 659 615 B1 offenbart ein Pedalwerk für ein Kraftfahrzeug, insbesondere ein Brems- oder Kupplungspedalwerk, mit einer Pedalstrebe, die zwei zueinander angeordnete Strebenschenkel sowie ein zwischen den beiden Strebenschenkeln schwenkbar gelagertes Pedal aufweist. An dem Pedal greift beabstandet zur Pedalschwenkachse ein Betätigungselement, insbesondere ein Brems- oder Kupplungselement, an. Eine Pedalachse ist mit ihren beiden Enden in zur Pedalachse hin offene Achslager eingesetzt und die Pedalstrebe ist im Bereich ihrer beiden Enden mit Aufnahmen zum Befestigen des Pedalwerks zwischen stationären Bauteilen des Kraftfahrzeugs versehen. Jeder Strebenschenkel weist einen Umformbereich auf und die mit den Strebenschenkeln verbundenen Achslager gelangen beim Überschreiten einer über mindestens eines der stationären Bauteile in die Pedalstrebe eingeleiteten Kraft außer Eingriff mit der Pedalachse. Bei Einleitung einer durch einen Aufprallunfall hervorgerufenen Kraft unterliegen die Strebenschenkel einer Formveränderung in ihrem Umformbereich und biegen sich auseinander. Wie die Praxis zeigte, kann das freigegebene Pedal von benachbarten Bauteilen eingeklemmt und in Richtung des Fahrers bewegt werden.

Es ist Aufgabe der Erfindung, einen Pedalbock der eingangs genannten Art zu schaffen, mit dem bei einem Fahrzeugaufprall eine Verletzung der unteren Extremitäten des Fahrers eines Fahrzeugs durch eine Verlagerung des Pedals weitgehend ausgeschlossen ist.

Erfindungsgemäß wird die Aufgabe dadurch gelöst, dass der Pedalachse ein Niederhalter zugeordnet ist, der bei freigegebener Pedalachse dieselbe beaufschlagt und/oder über einen Zugstab, der an dem Pedal unterhalb des Anlenkpunktes der Betätigungsstange angreift, eine Verdrehung des Pedals in Richtung der Stirnwand bewirkt.

Der Niederhalter kommt bei der Formveränderung der Pedalstreben aufgrund der bei einem Aufprallunfall über die Bauteile eingeleiteten Kraft an der Pedalachse zur Anlage, die von den Pedalstreben freigegeben ist. Durch die weitere Verformung der Pedalstreben sowie einer Verlagerung des Pedalbocks in Richtung des Fußraums bewirkt der Niederhalter zwangsweise eine Schwenkbewegung des Pedals in Richtung der Stirnwand um den Anlenkpunkt der Betätigungsstange sowie ein Niederdrücken des Pedals in Richtung eines Bodens des Fußraums. Aufgrund der Zuordnung des Niederhalters zu dem Pedal ist eine Verletzung der unteren Extremitäten des Fahrers eines Fahrzeugs durch eine Verlagerung des Pedals bei einem Fahrzeugaufprall weitgehend ausgeschlossen.

Zweckmäßigerweise ist der Niederhalter im Wesentlichen U-förmig ausgebildet und umfasst einen in Richtung der Pedalachse weisenden Beaufschlagungsschenkel, der in einen sich über das Pedal erstreckenden Steg mündet, an dessen freiem Ende der Zugstab befestigt ist. Der Niederhalter ist somit unter Gewährleistung seiner Funktion relativ einfach gestaltet und damit kostengünstig zu fertigen.

Zur gleichmäßigen Beaufschlagung der Pedalachse umfasst vorteilhafterweise der Beaufschlagungsschenkel des Niederhalters zwei zueinander beabstandete Ansätze zur Betätigung der Pedalachse, die über eine Strebe miteinander verbunden sind, wobei das Pedal zwischen den Ansätzen angeordnet ist.

Nach einer vorteilhaften Ausgestaltung der Erfindung ist der Niederhalter zwischen den beiden Pedalstreben angeordnet und weist an der der Pedalachse gegenüberliegenden Seite zumindest einen Flansch auf, der auf einer der Pedalstreben außerhalb des Umformbereichs derselben aufliegt. Aufgrund dieser Maßnahmen wird der Niederhalter bei einem Fahrzeugaufprall gemeinsam mit dem an der Stirnwand befestigten Pedalbock in Richtung des Fußraums verlagert und befindet sich bei der Freigabe der Pedalachse in seinem Wirkbereich, nämlich oberhalb der Pedalachse. Darüber hinaus erfordert die Anordnung des Niederhalters keinen zusätzlichen Platzbedarf.

Zur kostengünstigen Montage des Niederhalters ist bevorzugt der Flansch des Niederhalters dem Beaufschlagungsschenkel zugeordnet und weist eine zu einer Befestigungsbohrung der Pedalstrebe korrespondierende Bohrung auf. Über die Befestigungsbohrung der Pedalstrebe sowie die Bohrung des Niederhalters erfolgt die gemeinsame Festlegung an der Stirnwand mittels einer entsprechenden Verschraubung.

Um eine günstige Kraftübertragung auf die Pedalachse sicherzustellen, ist vorteilhafterweise oberhalb jedes Ansatzes des Beaufschlagungsschenkels ein Flansch ausgebildet.

Da das Pedal zu seiner Verlagerung, die das Verletzungsrisiko der unteren Extremitäten des Fahrers minimiert, entsprechende Freiheitsgrade aufweisen muss, umgreift zweckmäßigerweise das freie Ende des Zugstabs im Wesentlichen U-förmig das Pedal bereichsweise.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung gemaß den beigefügten Ansprüchen zu verlassen.

Die Erfindung wird im folgenden anhand eines Ausführungsbeispieles unter Bezugnahme auf die zugehörigen Zeichnungen näher erläutert. Es zeigen:

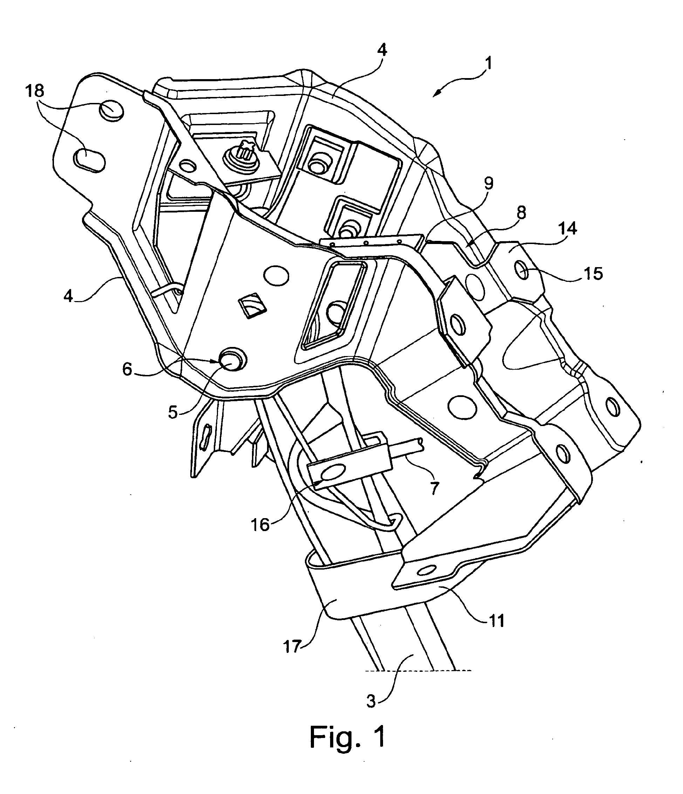

- Fig. 1: eine perspektivische Darstellung des erfindungsgemäßen Pedalbocks und

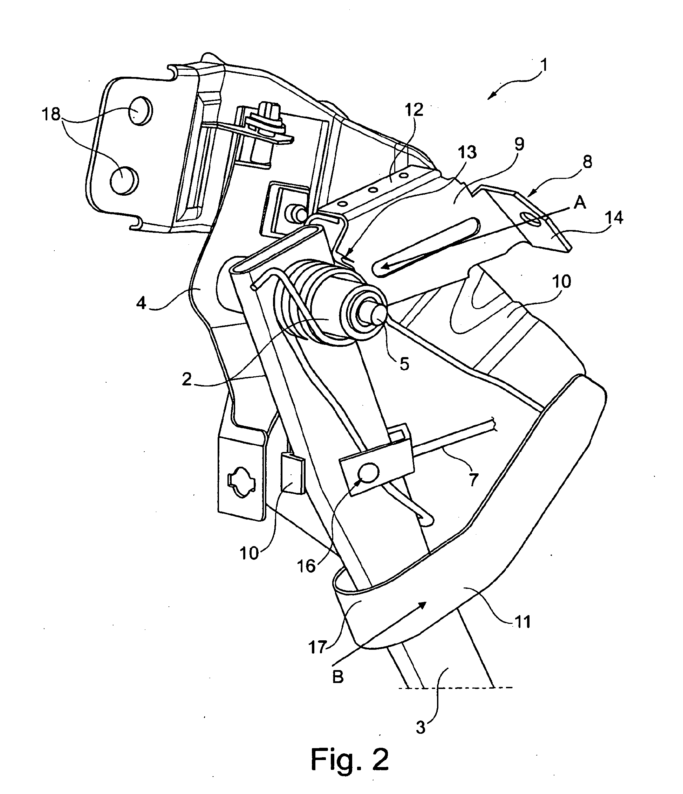

- Fig. 2: eine perspektivische Darstellung eines Teils des Pedalbocks nach Fig. 1.

Ein Pedalbock 1 umfasst zur schwenkbaren Lagerung einer Pedalachse 2 eines Pedals 3 zwei zueinander beabstandete Pedalstreben 4, die jeweils einen nicht dargestellten Umformbereich aufweisen, in dem sie sich bei Überschreiten einer über ein karosseriefestes Bauteil eingeleiteten Kraft auseinanderbiegen. Die Pedalachse 2 ist zur Lagerung zwischen den Pedalstreben 4 an ihren Stirnseiten jeweils mit einem Trägerachsstummel 5 versehen, die in korrespondierende Lagerbohrungen 6 der Pedalstreben 4 eingesetzt sind. Bei der Umformung der Pedalstreben 4 gelangen die Trägerachsstummel 5 der Pedalachse 2 außer Eingriff mit den zugeordneten Lagerbohrungen 6 und die Pedalachse 2 sowie das Pedal 3 ist freigegeben. Im Weiteren ist an dem Pedal 3 eine Betätigungsstange 7 zur Beaufschlagung einer nicht dargestellten Bremse oder Kupplung schwenkbar gelagert.

Zwischen den Pedalstreben 4 ist ein Niederhalter 8 angeordnet, der im Wesentlichen U-förmig ausgebildet ist. Der Niederhalter 8 umfasst einen in Richtung der Pedalachse 2 weisenden Beaufschlagungsschenkel 9, der in einen sich über das Pedal 3 erstreckenden Steg 10 mündet, an dessen freiem Ende ein Zugstab 11 befestigt ist. Eine Strebe 12 des Beaufschlagungsschenkels 9 übergreift das Pedal 3 im Bereich der Pedalachse 2 und weist gegenüberliegende sowie zueinander beabstandete Ansätze 13 auf, zwischen denen sich das Pedal 3 befindet. Auf der der Pedalachse 2 gegenüberliegenden Seite des Beaufschlagungsschenkels 9 des Niederhalters 8 sind zwei sich von den Ansätzen 13 erstreckende Flansche 14 ausgebildet, die auf den zugeordneten Pedalstreben 4 aufliegen. Jeder Flansch 14 ist mit einer zu einer Befestigungsbohrung 15 der Pedalstrebe 4 korrespondierenden Bohrung zur Festlegung des Pedalbocks 1 an einer nicht dargestellten Stirnwand versehen.

Der von einem Ansatz 13 des Beaufschlagungsschenkels 9 abgehende Steg 10 erstreckt sich über das Pedal 3 in einen Bereich hinter einem Anlenkpunkt 16 der Betätigungsstange 7. Der an dem Steg 10 befestigte Zugstab 11 weist in Richtung des Pedals 3 und umgreift dasselbe mit einer U-förmigen Abwinklung 17.

Bei einem Fahrzeugaufprall erfolgt neben der Freigabe der Pedalachse 2 durch die Umformung der Pedalstreben 4 eine Verformung des endseitig über Befestigungsbohrungen 18 an einem nicht dargestellten Querträger befestigten Pedalbocks 1 in Richtung des Fußraums aufgrund der Verlagerung der den Pedalbock 1 tragenden Stirnwand. Hierbei kommen die Ansätze 13 des Beaufschlagungsschenkels 9 des Niederhalters 8 in Wirkverbindung mit der freigegebenen Pedalachse 2 und drücken diese in Richtung eines Bodens des Fußraums gemäß Pfeil A. Gleichzeitig greift der Zugstab 11 an dem Pedal 3 an und verschwenkt es in Richtung des Pfeils B um den Anlenkpunkt 16 der Betätigungsstange 7.

### Bezugszeichenliste

1. Pedalbock
2. Pedalachse
3. Pedal
4. Pedalstrebe
5. Trägerachsstummel
6. Lagerbohrung
7. Betätigungsstange
8. Niederhalter
9. Beaufschlagungsschenkel
10. Steg
11. Zugstab
12. Strebe
13. Ansatz
14. Flansch
15. Befestigungsbohrung
16. Anlenkpunkt
17. Abwinklung
18. Befestigungsbohrung

## Patentansprüche

1. Pedalbock (1), der an einer Stirnwand im Fußraum eines Fahrzeuges zwischen karosseriefesten Bauteilen anordbar ist, mit zwei Pedalstreben (4), an denen an einer schwenkbar gelagerten Pedalachse (2) eine über eine Betätigungsstange (7) eine Bremse oder eine Kupplung zu betätigendes Pedal (3) gelagert ist, wobei die Pedalstreben (4) jeweils einen Umformbereich aufweisen, in dem sie bei Überschreiten einer über mindestens eines der Bauteile eingeleiteten Kraft einer Formveränderung unterliegen und sich auseinanderbiegen, wonach die Pedalachse (2) freigegeben ist, **dadurch gekennzeichnet, dass** der Pedalachse (2) ein Niederhalter (8) zugeordnet ist, der bei freigegebener Pedalachse (2) dieselbe beaufschlagt und/oder über einen Zugstab (11), der an dem Pedal (3) unterhalb des Anlenkpunktes (16) der Betätigungsstange (7) angreift, eine Verdrehung des Pedals (3) in Richtung der Stirnwand bewirkt.

2. Pedalbock nach Anspruch 1, **dadurch gekennzeichnet, dass** der Niederhalter (8) im Wesentlichen U-förmig ausgebildet ist und einen in Richtung der Pedalachse (2) weisenden Beaufschlagungsschenkel (9) umfasst, der in einen sich über das Pedal (3) erstreckenden Steg (10) mündet, an dessen freiem Ende der Zugstab (11) befestigt ist.

3. Pedalbock nach Anspruch 2, **dadurch gekennzeichnet, dass** der Beaufschlagungsschenkel (9) des Niederhalters (8) zwei zueinander beabstandete Ansätze (13) zur Betätigung der Pedalachse (2) umfasst, die über eine Strebe (12) miteinander verbunden sind, wobei das Pedal (3) zwischen den Ansätzen (13) angeordnet ist.

4. Pedalbock nach Anspruch 2, **dadurch gekennzeichnet, dass** der Steg (10) sich in einen Bereich hinter dem Anlenkpunkt (16) der Betätigungsstange (7) erstreckt.

5. Pedalbock nach Anspruch 1 oder 2, **dadurch gekennzeichnet, dass** der Niederhalter (8) zwischen den beiden Pedalstreben (4) angeordnet ist und an der der Pedalachse (2) gegenüberliegenden Seite zumindest einen Flansch (14) aufweist, der auf einer der Pedalstreben (4) außerhalb des Umformbereichs derselben aufliegt.

6. Pedalbock nach Anspruch 5, **dadurch gekennzeichnet, dass** der Flansch (14) des Niederhalters (8) dem Beaufschlagungsschenkel (9) zugeordnet ist und eine zu einer Befestigungsbohrung (15) der Pedalstrebe (4) korrespondierende Bohrung aufweist.

7. Pedalbock nach Anspruch 5 oder 6, **dadurch gekennzeichnet, dass** oberhalb jedes Ansatzes (13) des Beaufschlagungsschenkels (9) ein Flansch (14) ausgebildet ist.

8. Pedalbock nach Anspruch 1 oder 2, **dadurch gekennzeichnet, dass** das freie Ende des Zugstabs (11) im Wesentlichen U-förmig das Pedal (3) bereichsweise umgreift.

## Claims

1. A pedal bracket (1) which can be arranged on a face wall in the footwell of a vehicle between components fixed to the body, comprising two pedal struts (4) on which a pedal (3) is held on a pivotably held pedal axle (2), which pedal can be actuated via an actuating rod (7), a brake or a clutch, with the pedal struts (4) each having a deformation area in which upon exceeding a force introduced via at least one of the components they are subject to a change in form and will bend apart, whereupon the pedal axle (2) is released, **characterized in that** the pedal axle (2) is associated with a retainer (8) which acts upon the pedal axle (2) once it is released and/or causes a twisting of the pedal (3) in the direction of the face wall via a tie rod (11) which acts upon the pedal (3) beneath the articulation point (16) of the actuating rod (7).

2. A pedal bracket according to claim 1, **characterized in that** the retainer (8) is arranged in a substantially U-shaped manner and comprises an actuating leg (9) which faces in the direction of the pedal axis (2) and which opens into a web (10) extending over the pedal (3), at the free end of which the tie rod (11) is fastened.

3. A pedal bracket according to claim 2, **characterized in that** the actuating leg (9) of the retainer (8) comprises two mutually spaced noses (13) for actuating the pedal axis (2) which are connected via a strut (12) with each other, with the pedal (3) being arranged between the noses (13).

4. A pedal bracket according to claim 2, **characterized in that** the web (10) extends to a region behind the articulation point (16) of the actuating rod (7).

5. A pedal bracket according to claim 1 or 2, **characterized in that** the retainer (8) is arranged between the two pedal struts (4) and comprises at least one flange (14) on the side opposite of the pedal axle (2), which flange rests on one of the pedal struts (4) outside of the deformation region of the same.

6. A pedal bracket according to claim 5, **characterized in that** the flange (14) of the retainer (8) is associated with the actuating leg (9) and comprises a bore hole which corresponds to a fastening bore (15) of the pedal strut (4).

7. A pedal bracket according to claim 5 or 6, **characterized in that** a flange (14) is formed above each nose (13) of the actuating leg (9).

8. A pedal bracket according to claim 1 or 2, **characterized in that** the free end of the tie rod (11) encompasses the pedal (3) in sections in a substantially U-shaped manner.

## Revendications

1. Pédalier (1) pouvant être disposé sur une paroi d'extrémité dans l'espace de pieds d'un véhicule entre des composants solidaires de la carrosserie, avec deux bras de pédale (4) sur lesquels est supportée sur un axe de pédale (2) supporté avec possibilité de pivotement une pédale (3) de frein ou d'embrayage à actionner à l'aide d'une tige d'actionnement (7), dans lequel les bras de pédale (4) présentent chacun une zone de déformation dans laquelle ils subissent un changement de forme et s'écartent en cas de dépassement d'une force transmise par au moins un des composants de sorte que l'axe de pédale (2) est dégagé, **caractérisé en ce que** l'axe de pédale (2) est associé à un élément presseur (8) qui agit sur l'axe de pédale (2) quand celui-ci est libéré et/ou réalise, par l'intermédiaire d'une barre de traction (11) qui se met en prise sur la pédale (3) en dessous du point d'articulation (16) de la tige d'actionnement (7), une torsion de la pédale (3) en direction de la paroi d'extrémité.

2. Pédalier selon la revendication 1, **caractérisé en ce que** l'élément presseur (8) est sensiblement en forme de U et comprend un bras d'action (9) orienté dans le sens de l'axe de pédale (2), qui aboutit à une barrette (10) s'étendant par-dessus la pédale (3) et à l'extrémité libre de laquelle la barre de traction (11) est fixée.

3. Pédalier selon la revendication 2, **caractérisé en ce que** le bras d'action (9) de l'élément presseur (8) comprend deux appuis (13) écartés l'un de l'autre pour actionner l'axe de pédale (2), qui sont reliés entre eux par une entretoise (12), la pédale (3) étant disposée entre les appuis (13).

4. Pédalier selon la revendication 2, **caractérisé en ce que** la barrette (10) s'étend dans une zone située derrière le point d'articulation (16) de la barre d'actionnement (7).

5. Pédalier selon la revendication 1 ou 2, **caractérisé en ce que** l'élément presseur (8) est disposé entre les deux bras de pédale (4) et présente sur son côté faisant face à l'axe de pédale (2) au moins une bride (14) qui repose sur l'un des bras de pédale (4) en dehors de la zone de déformation de celui-ci.

6. Pédalier selon la revendication 5, **caractérisé en ce que** la bride (14) de l'élément presseur (8) est associée au bras d'action (9) et présente un alésage correspondant à un alésage de fixation (15) du bras de pédale (4).

7. Pédalier selon la revendication 5 ou 6, **caractérisé en ce qu'**une bride (14) est formée au-dessus de chaque appui (13) du bras d'action (9).

8. Pédalier selon la revendication 1 ou 2, **caractérisé en ce que** l'extrémité libre de la barre de traction (11) entoure la pédale (3) sensiblement en forme de U.
